# FASCICULE DE BREVET EUROPEEN

(11) **EP 3 213 999 B1**
(45) Date de publication et mention de la délivrance du brevet: **05.09.2018**
(21) Numéro de dépôt: 17158210.9
(22) Date de dépôt: 27.02.2017
(51) Int. Cl.: B64G 1/22, F16M 11/40, B64G 1/66, F16M 13/02

(54) **DISPOSITIF DE DEPLOIEMENT ET DE POINTAGE**
VORRICHTUNG ZUR ENTFALTUNG UND AUSRICHTUNG
DEPLOYMENT AND POINTING DEVICE

(30) Priorité: 02.03.2016 FR 1600356
(43) Date de publication de la demande: 06.09.2017
(73) Titulaire: Thales, 92400 Courbevoie (FR)
(72) Inventeur: DUCARNE, Julien, 06156 CANNES LA BOCCA CEDEX (FR); BAUDASSÉ, Yannick, 06156 CANNES LA BOCCA CEDEX (FR); GUINOT, François, 06156 CANNES LA BOCCA CEDEX (FR)
(74) Mandataire: Collet, Alain

(56) Documents cités:
- EP-A1- 1 676 776
- EP-A1- 2 143 641
- EP-A1- 2 740 669
- EP-A1- 2 977 322
- EP-A1- 2 977 323
- EP-A2- 0 319 921
- WO-A1-2015/068062

## Description

L'invention concerne un dispositif de gerbage, de déploiement et de pointage destiné à des équipements embarqués sur des satellites, par exemple et non limitativement un dispositif de déploiement et de pointage d'un télescope.

On entend ici par « équipement embarqué » tout équipement solidarisé au moins partiellement à au moins un satellite. Il peut notamment s'agir d'un instrument d'observation, destiné à remplir une mission d'observation spatiale et par exemple constitué d'un ou plusieurs télescopes spatiaux, éventuellement répartis sur plusieurs satellites, ou d'au moins une antenne radar, ou bien d'une tuyère plasmique, ou encore d'un capteur.

Par « mission d'observation spatiale », on entend aussi bien les missions destinées à observer la Terre depuis l'espace que les missions destinées à observer une partie de l'univers depuis l'espace.

Afin de remplir des missions d'observation spatiale, certains satellites comportent au moins une partie d'un instrument d'observation, comme par exemple un télescope spatial.

De tels télescopes comportent au moins un dispositif de déploiement destiné à maintenir un premier élément, tel qu'un miroir (éventuellement de type primaire, aussi fréquemment appelé collecteur de flux), éloigné d'une distance choisie d'un second élément, tel qu'un miroir (éventuellement de type secondaire) ou une partie d'un détecteur, implantée au niveau du plan focal où se forment les images. Un tel dispositif constitue avec les éléments qu'il supporte une structure à configuration géométrique fixe. Cette dernière est dimensionnée de manière à supporter les contraintes mécaniques dues à la pesanteur et aux charges subies pendant les différentes phases du lancement, et notamment lors du décollage de la fusée dans laquelle est embarqué le satellite que le dispositif équipe.

Une fois la mission commencée, les charges supportées par la structure sont très faibles, voire quasiment nulles. La structure s'avère donc surdimensionnée pendant toute sa durée de vie opérationnelle, ce qui induit une inertie, notamment transverse, plus importante que celle qui est réellement nécessaire. Cette sur-inertie ne pouvant pas être réduite en orbite, elle limite la vitesse de dépointage du télescope et donc le temps pendant lequel il peut acquérir des images, ce qui est pénalisant notamment lorsqu'il est embarqué sur un satellite dit agile et/ou lorsqu'un mosaïquage doit être effectué (du fait que le champ de l'instrument est inférieur au champ à observer).

En outre, le surdimensionnement de la structure se traduit par une masse et un encombrement additionnels qui imposent l'utilisation de fusées de plus grande capacité d'emport et/ou peuvent limiter le nombre de satellites pouvant être lancés par une même fusée.

Généralement, un tel dispositif constituant une structure à configuration géométrique fixe ne comprend pas de dispositif de pointage.

Afin d'avoir une solution de déploiement et de pointage simple et fiable, il est souhaitable de limiter le nombre de mécanismes et de composants embarqués tout en maintenant une capacité d'aménagement optimisée du télescope.

Le brevet EP1676776 décrit une structure déployable pour télescope basé sur l'utilisation de mètre-rubans offrant notamment un avantage de compacité par rapport aux solutions non déployables. Mais le pointage fin est assuré par un dispositif annexe composé d'actionneurs linéaires. Autrement dit, le dispositif de pointage est indépendant du dispositif de déploiement. En conséquent, ce type de dispositif nécessite l'utilisation d'un dispositif supplémentaire, et donc d'un grand nombre de composants. Il en résulte que la chaîne de raideur et la précision sont dégradées. De plus, une telle solution est désavantageuse en termes d'encombrement et de masse. Enfin, elle a un coût d'industrialisation important. De même, le document EP 0 319 921 décrit un dispositif de déploiement et de pointage d'un instrument utilisant des mètre-rubans mais n'offre pas une grande précision de pointage.

Le but de l'invention est de réaliser un dispositif de déploiement et de pointage d'un instrument ne comportant pas les inconvénients des dispositifs existants, présentant l'avantage d'être peu encombrant, simple à réaliser, présentant une optimisation du volume du dispositif lorsqu'il est stocké sous la coiffe d'un lanceur, permettant la capacité de gerbage sans utiliser de dispositif de maintien additionnel, la maîtrise du déploiement et permettant une rigidité et une stabilité du dispositif lorsqu'il est déployé sans utiliser de dispositif de maintien additionnel ainsi qu'une capacité de pointage fin de l'instrument sans dispositif additionnel de pointage.

L'invention vise à pallier tout ou partie des problèmes cités plus haut en proposant un dispositif de déploiement et de pointage d'un instrument assurant le déploiement et le gerbage de l'instrument ainsi que le pointage fin de l'instrument de façon simple et fiable.

A cet effet, l'invention a pour objet un dispositif de déploiement et de pointage d'un instrument comprenant un premier support, un second support destiné à recevoir l'instrument, N mandrins, N étant un nombre entier supérieur ou égal à 1, positionnés autour du premier support, chacun des N mandrins étant mobile en rotation par rapport au premier support autour d'un axe de mandrin ZN intersectant ledit mandrin, N éléments linéaires chacun des N éléments linéaires coopérant avec un des N mandrins, chacun des N éléments linéaires ayant une première et une seconde extrémités. Selon l'invention la première extrémité des N éléments linéaires est fixée dans le mandrin avec lequel il coopère en un point de fixation, et la seconde extrémité des N éléments linéaires est reliée au second support, de façon à ce qu'une rotation dudit mandrin autour de son axe ZN génère un déplacement du point de fixation, et chacun des N mandrins est excentrique autour de l'axe de mandrin ZN intersectant ledit mandrin.

Avantageusement, chacun des N éléments linéaires est apte à passer d'une configuration enroulée autour du mandrin avec lequel il coopère autour de l'axe de mandrin ZN intersectant ledit mandrin à une configuration déployée selon l'axe de déploiement XN sensiblement perpendiculaire à l'axe de mandrin ZN, et inversement.

Selon un mode de réalisation, chacun des N mandrins est configuré de façon à avoir un rayon minimal apte à permettre l'enroulement de l'élément linéaire coopérant avec ledit mandrin sans l'endommager.

Selon un autre mode de réalisation, au moins un des N mandrins est une roue cylindrique autour d'un axe de roue, l'axe de mandrin ZN intersectant ledit mandrin étant sensiblement parallèle à l'axe de roue et décentré par rapport à l'axe de roue.

Selon un autre mode de réalisation, la seconde extrémité des N éléments linéaires est reliée au second support de façon à guider linéairement le second support par rotation des N mandrins en configuration déployée.

Selon un autre mode de réalisation, le dispositif selon l'invention comprend N éléments de contact, chacun des N éléments de contact coopérant avec un des N éléments linéaires, chacun des N éléments de contact étant configuré pour s'opposer au décollement de l'élément linéaire avec lequel il coopère par rapport au mandrin avec lequel l'élément linéaire coopère.

Avantageusement, les N éléments linéaires sont des mètre-rubans.

Selon un autre mode de réalisation, N est égal à 6, les N éléments linéaires formant trois paires de deux éléments linéaires, et deux éléments linéaires d'une paire constituent deux côtés non parallèles d'un trapèze une fois placés en leur configuration déployée.

Selon un autre mode de réalisation, N est égal à 6, les N éléments linéaires formant trois paires de deux éléments linéaires, et deux éléments linéaires d'une paire constituent deux côtés d'un triangle une fois placés en leur configuration déployée.

Avantageusement, les éléments linéaires de chaque paire sont de longueur identique de sorte que le trapèze correspondant soit de type isocèle.

Avantageusement, les éléments linéaires de chaque paire sont de longueur identique de sorte que le triangle correspondant soit de type isocèle.

L'invention concerne aussi un équipement spatial comprenant au moins un tel dispositif.

L'invention sera mieux comprise et d'autres avantages apparaîtront à la lecture de la description détaillée d'un mode de réalisation donné à titre d'exemple, description illustrée par le dessin joint dans lequel :
- Les figures 1a et 1b représentent schématiquement le principe permettant un pointage fin d'un instrument par déformation d'un élément linéaire selon l'invention ;
- la figure 2 représente schématiquement un exemple d'application d'un dispositif de pointage fin selon l'invention ;
- la figure 3 représente schématiquement un mode de réalisation d'un dispositif de déploiement et de pointage en position stockée selon l'invention ;
- la figure 4 représente schématiquement un mode de réalisation d'un dispositif de déploiement et de pointage en cours de déploiement selon l'invention;
- la figure 5 représente schématiquement un mode de réalisation d'un dispositif de déploiement et de pointage en position déployée selon l'invention ;
- la figure 6 représente schématiquement un mode de réalisation d'un dispositif de déploiement et de pointage avec six éléments linéaires selon l'invention ;
- la figure 7 représente schématiquement un exemple de réalisation d'un dispositif de déploiement et de pointage selon l'invention comprenant six éléments linéaires ;
- la figure 8 représente schématiquement un autre exemple de réalisation d'un dispositif de déploiement et de pointage selon l'invention ;
- la figure 9 représente un mode de réalisation d'un dispositif de déploiement et de pointage selon l'invention comprenant trois paires d'éléments linéaires, deux éléments linéaires d'une paire constituant deux côtés d'un triangle une fois placés dans leurs positions finales respectives ;
- les figures 10a et 10b représentent schématiquement un autre exemple de réalisation d'un dispositif de déploiement et de pointage selon l'invention ;
- les figures 11a et 11b représentent schématiquement un autre exemple de réalisation d'un dispositif de déploiement et de pointage selon l'invention.

Par souci de clarté, les mêmes éléments porteront les mêmes repères dans les différentes figures.

On considère dans ce qui suit que l'équipement spatial est un instrument d'observation tel qu'un télescope embarqué sur un satellite d'observation, par exemple de type agile.

Mais l'invention n'est pas limitée à ce type d'équipement spatial. En effet, il peut s'agir d'un instrument d'observation constitué de plusieurs télescopes répartis sur plusieurs satellites volant en formation, ou bien d'une antenne radar comportant un premier élément tel qu'un réflecteur et un second élément tel qu'une source. Il pourrait également s'agir de tuyères dites plasmiques destinées à contrôler l'attitude du satellite et devant être déployées une fois le satellite en orbite, de manière à augmenter le bras de levier pour réduire les forces à appliquer. Il peut également s'agir de capteurs dont une partie, destinée à l'acquisition de données, doit être écartée du satellite une fois celui-ci placé sur son orbite, de manière à ne pas faire l'objet d'une perturbation électromagnétique ou simplement électrique.

Dans cette demande, le mandrin désigne une pièce en rotation avec une surface d'enroulement sur laquelle on peut enrouler, totalement ou partiellement, un élément linéaire tel qu'un mètre-ruban, une lame, un tube ou barre cylindrique voire une plaque.

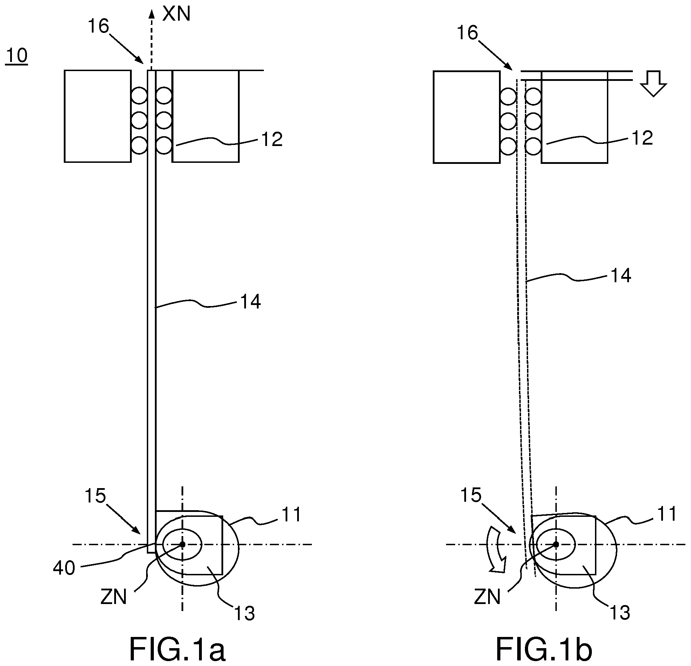

Les **figures 1a et 1b** représentent schématiquement le principe permettant un pointage fin d'un instrument par déformation d'un élément linéaire selon l'invention. Le dispositif 10 représenté sur les figures 1a et 1b est un dispositif de déploiement et de pointage d'un instrument (non représenté sur les figures 1a et 1b) comprenant un mandrin 11, un guidage 12, un premier support 13 destiné à guider le mandrin 11, autour d'un axe de mandrin ZN intersectant ledit premier support 13. Le dispositif 10 comprend un élément linéaire 14 coopérant avec le mandrin 11, l'élément linéaire ayant une première extrémité 15 et une seconde extrémité 16. Selon l'invention, la première extrémité 15 de l'élément linéaire 14 est fixée sur le mandrin 11 avec lequel il coopère en un point de fixation 40, la seconde extrémité 16 de l'élément linéaire est reliée au guidage 12, de façon à ce qu'une rotation dudit mandrin autour de son axe ZN génère un déplacement du point de fixation 40. Le mandrin 11 est excentrique autour de l'axe de mandrin ZN intersectant ledit mandrin 11.

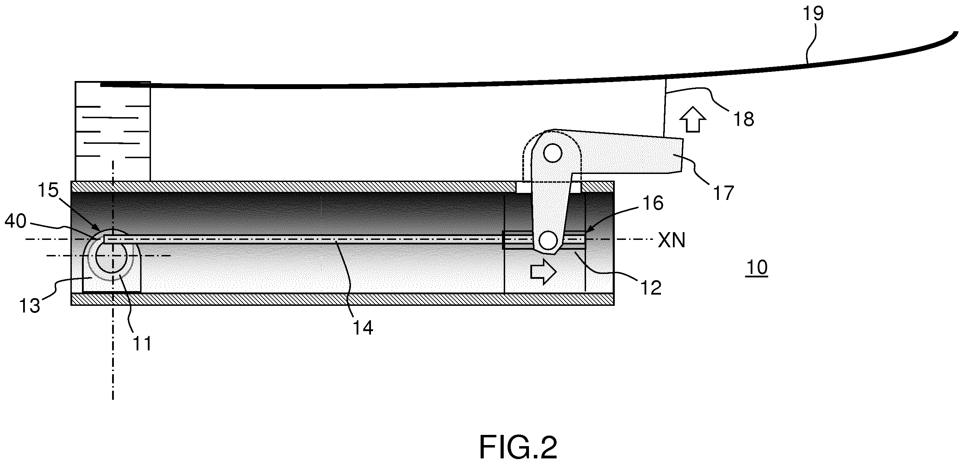

L'élement de guidage 12 peut être réalisé de différentes manières. Il peut s'agir d'un guidage quasi-linéaire, par exemple à billes (tel que schématisé sur la figure 1) ou à double lames ou membranes (tel que schématisé sur la figure 2). Dans ce cas, on actionne en translation au voisinage de l'extrémité 16. Ces éléments (billes, lames, membranes, ...) permettant de guider la seconde extrémité 16 de l'élément linéaire 14.

Dans le contexte d'un hexapode, le guidage est constitué par les cinq autres éléments linéaires sur une trajectoire complexe.

Le guidage 12 peut être relié à un second support destiné à recevoir un instrument, comme illustré sur la figure 2.

L'élément linéaire 14 peut être par exemple une barre, une lame, une plaque ou un mètre-ruban.

On peut noter que l'élément linéaire 14 peut prendre deux positions distinctes. Autrement dit, l'élément linéaire peut être apte à passer d'une configuration enroulée, totalement ou partiellement, autour du mandrin 11 autour de l'axe de mandrin ZN à une configuration déployée selon l'axe de déploiement XN, et inversement. Dans le cas présenté sur les figures 1a et 1b, l'élément linéaire 14 peut être en configuration dite fléchie, c'est-à-dire après une légère rotation du mandrin 11 comme indiqué par la flèche sur la figure 1b, pour laquelle l'élément linéaire 14 plie légèrement sur lui-même et ce indifférement dans le sens positif ou négatif de la rotation du mandrin 11. Et l'élément linéaire 14 peut être en configuration déployée selon l'axe XN. Les deux positions distinctes que l'élément linéaire 14 peut prendre dépendent de la nature de l'élément linéaire. Une plaque ou une barre est préférentiellement utilisée pour une configuration où la plaque ou la barre fléchissent légèrement sur elles-mêmes. Un mètre-ruban ou une lame flexible est avantageusement utilisée lorsque l'on souhaite une configuration enroulée totale, c'est-à-dire quand on souhaite que l'élément linéaire 14 s'enroule complètement autour du mandrin 11 dans le cas d'un besoin de rétractation complet de l'élément 14 et non plus seulement sur une faible portion.

Ainsi, une fois en position verrouillée, avec une rotation du mandrin 11, l'élément linéaire 14 étant encastré dans le mandrin 11 et fixé à sa seconde extrémité 16 au guidage 12, l'élément linéaire 14 se déforme linéairement. Autrement dit, le guidage 12 est guidé linéairement par rapport au mandrin 11, comme indiqué par les flèches sur la figure 1b. A partir d'une rotation au niveau du mandrin 11, on obtient une translation au niveau du guidage 12. Comme ce guidage linéaire est basé sur la déformation d'un élément linéaire, on obtient une grande précision au niveau du déplacement linéaire du guidage 12. En d'autres termes, une micro-oscillation au niveau du mandrin 11 génère un déplacement du point de fixation et ainsi, par déformation de l'élément linéaire 14, un pointage fin du guidage 12.

La forme et la taille de la section de l'élément linéaire 14 sont choisies en fonction du déplacement du support souhaité ainsi que du couple fourni au niveau du mandrin par un moteur permettant la motorisation du mandrin 11. La section dépend également de l'effort appliqué au support, c'est-à-dire du type d'objet à déplacer, ainsi que du déport de l'axe ZN par rapport à l'axe de l'élément linéaire 14.

La **figure 2** représente schématiquement un exemple d'application d'un dispositif de pointage fin 10 selon l'invention. La première extrémité 15 de l'élément linéaire 14 est encastrée dans le mandrin 11, la seconde extrémité 16 de l'élément linéaire est guidée par le guidage 12. En associant un mécanisme au guidage 12, par exemple un levier 17 et une lame 18, il est possible de déplacer un instrument 19, par exemple ici une antenne. La rotation du premier support 13 entraîne la déformation de l'élément linéaire 14 qui génère au niveau du guidage linéaire 12 un déplacement. Le guidage 12 met le levier 17 en mouvement qui tire ou pousse la lame 18 afin de déplacer l'instrument 19.

On ne sort pas du cadre de l'invention en utilisant tout autre mécanisme de transmission de mouvement entre le guidage 12 et l'instrument 19. Dans l'exemple d'application, l'instrument 19 est une antenne, mais peut être n'importe quel autre instrument comme un miroir, un laser, etc.

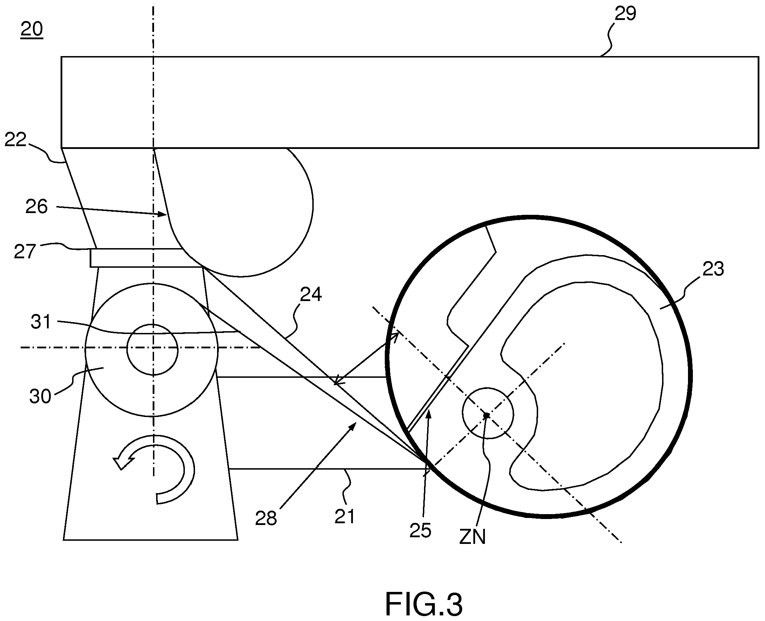

La **figure 3** représente schématiquement un mode de réalisation d'un dispositif 20 de déploiement et de pointage en position stockée selon l'invention. Le dispositif 20 de déploiement et de pointage d'un instrument 19 comprend un premier support 21, un second support 22 destiné à recevoir l'instrument 29, un mandrin 23 positionné autour du premier support 21, mobile en rotation par rapport au premier support 21 autour d'un axe de mandrin ZN intersectant le mandrin 23. Le dispositif 20 comprend un élément linéaire 24 coopérant avec le mandrin 23, l'élément linéaire 24 ayant une première extrémité 25 et une seconde extrémité 26. Selon l'invention, la première extrémité 25 de l'élément linéaire 24 est fixée dans le mandrin 23 avec lequel il coopère en un point de fixation, la seconde extrémité 26 de l'élément linéaire est reliée au second support 22, de façon à ce qu'une rotation du mandrin 23 autour de son axe ZN génère un déplacement du point de fixation. De même que sur les configurations illustrées sur les figures 1 et 2, la seconde extrémité 26 de l'élément linéaire 24 est guidée par un guidage relié au second support 22. Ainsi, la rotation du mandrin 23 crée le mouvement de l'élément linéaire 24 qui est guidé au niveau de sa seconde extrémité 26 par le guidage relié au second support.

Le mandrin 23 est excentrique autour de l'axe de mandrin ZN intersectant le mandrin 23.

Avantageusement, l'élément linéaire 24 est un mètre-ruban. Dans ce cas, l'élément linéaire 24 est apte à passer d'une configuration enroulée, ici totalement, autour du mandrin 23 autour de l'axe de mandrin ZN à une configuration déployée selon l'axe de déploiement XN, et inversement.

Comme représenté sur la figure 3, le mandrin 23 est configuré de façon à avoir un rayon minimal apte à permettre l'enroulement de l'élément linéaire 24 coopérant avec ledit mandrin 23 sans l'endommager. Cette configuration répond aux contraintes d'encombrement du mandrin avec son élément linéaire enroulé autour de lui en position enroulée et aux contraintes de résistance dont l'élément linéaire doit faire preuve. Ainsi, le mandrin 23 est idéalement configuré de façon à avoir un rayon suffisamment petit pour ne pas être trop encombrant, mais pas trop petit de façon à avoir une certaine courbure permettant à l'élément linéaire de s'enrouler autour de cette courbure sans être endommagé, notamment au niveau de la surface d'enroulement du mandrin 23 où l'élément linéaire 24 est encastré puisque c'est précisément à cet endroit qu'il subit le plus de contraintes dans la transition de l'encastrement dans le mandrin à l'enroulement autour du mandrin. Dans le cas d'un enroulement à brins multiples, la contrainte maximale se situe au niveau du dernier enroulement, dans la zone à la sortie du ruban.

Avantageusement, le mandrin 23 est une roue cylindrique autour d'un axe de roue, l'axe de mandrin ZN intersectant ledit mandrin 23 étant sensiblement parallèle à l'axe de roue et décentré par rapport à l'axe de roue. En configuration enroulée, l'axe ZN du mandrin est volontairement positionné à proximité de la sortie linéaire de l'élément linéaire 24. Ceci permet de garantir un effort important malgré un couple réduit.

On peut noter que le mandrin n'est pas forcément une roue cylindrique, le mandrin peut être une came de forme libre.

En configuration enroulée de l'élément linéaire 24, l'instrument 29 est maintenu plaqué contre un plot 27. L'axe ZN du mandrin 23 étant positionné à proximité de la sortie linéaire de l'élément linéaire 24, le maintien en position de l'élément linéaire 24 et donc de l'instrument 29 est assuré.

Avantageusement, le dispositif 20 comprend un élément de contact 28 coopérant avec l'élément linéaire 24, l'élément de contact étant configuré pour s'opposer au décollement de l'élément linéaire 24 avec lequel il coopère par rapport au mandrin 23 avec lequel l'élément linéaire 24 coopère. Sur la figure 3, l'élément de contact est constitué par une lame flexible enroulée autour d'une poulie 30, l'élément de contact 28 étant en fait réalisé par le contact d'un élément 31 enroulable autour de la poulie 30, par exemple une lame ou un ruban, sur l'élément linéaire 24 au niveau de la sortie linéaire de l'élément linéaire 24 au niveau de son mandrin 23. Ce contact s'oppose au décollement de l'élément linéaire 24 par rapport au mandrin 23. Autrement dit, l'élément de contact 28 garantit le non-déversement de l'élément linéaire 24 en configuration enroulée et aussi lors du déploiement de l'élément linéaire 24.

L'invention ne se limite pas à l'élément de contact réalisé au moyen d'une poulie de plaquage. L'élément de contact peut également être réalisé par tout autre moyen, ponctuel ou surfacique, par exemple au moyen d'une ou plusieurs aiguilles, d'un ou plusieurs galets enrouleurs ou un ou plusieurs éléments magnétiques, sans sortir du cadre de l'invention. La poulie doit être motorisée par rapport à son support afin de mettre en tension permanente la lame 31. On peut utiliser un ressort spirale ou mettre en place un système d'entraînement complémentaire (câbles et poulies ou engrenages par exemple), permettant de limiter le besoin en capacité angulaire du ressort dans le cas d'un grand nombre de tours.

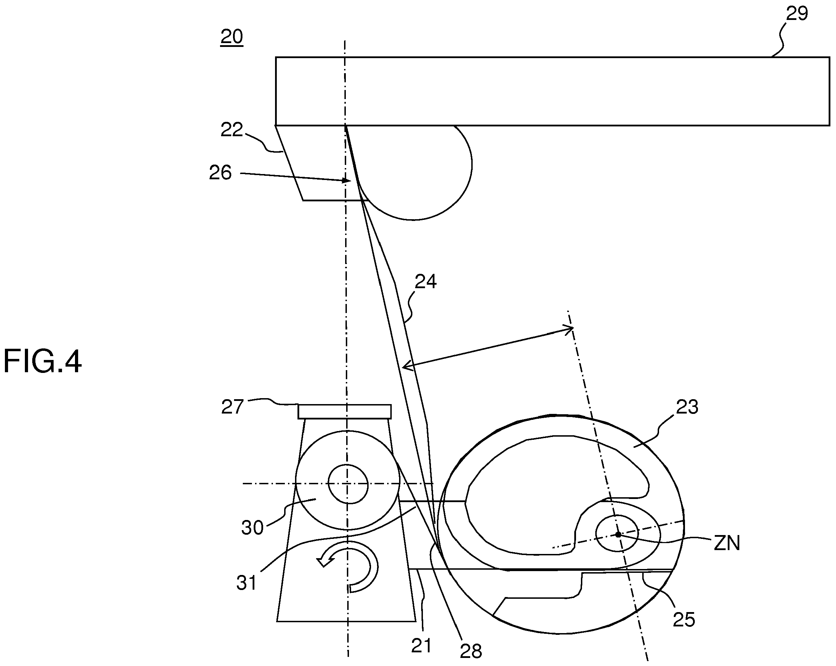

La **figure 4** représente schématiquement le dispositif 20 de déploiement et de pointage en cours de déploiement selon l'invention. Par rapport à la représentation de la figure 3, le mandrin 23 a effectué une rotation autour de son axe ZN. L'élément linéaire 24 est en cours de déploiement, c'est-à-dire qu'il passe de sa configuration enroulée autour du mandrin 23 à une configuration déployée (pas encore atteinte sur la figure 4). Pendant le déploiement, du fait de l'excentricité du mandrin 23, le rayon de rotation du mandrin est variable, mais la qualité de déploiement n'en est pas altérée pour autant. L'élément de contact 28 permet de garantir le non-déversement de l'élément linéaire 24 lors de son déploiement. Avec le déploiement de l'élément linéaire 24, la distance entre le support 21 et le support 22 augmente.

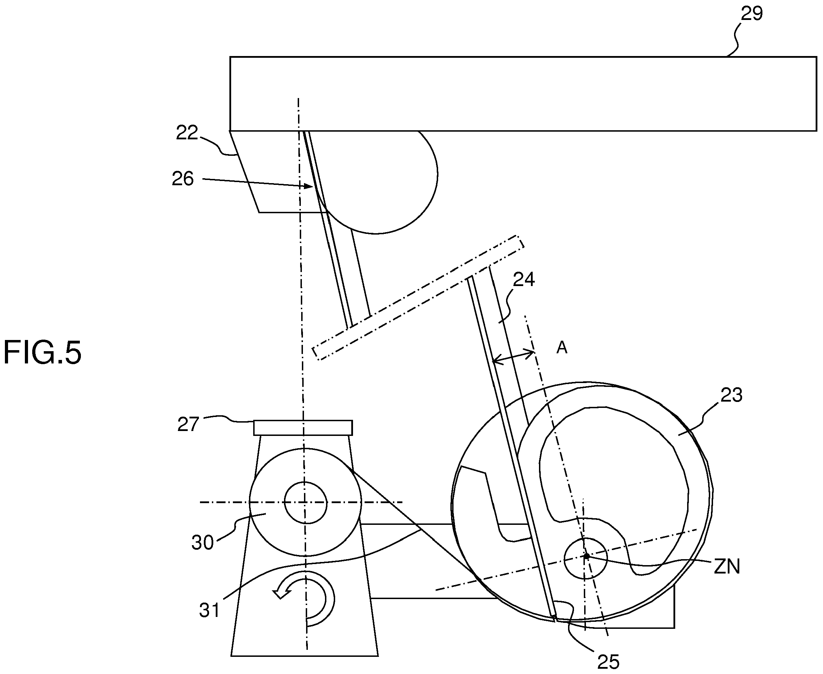

La **figure 5** représente schématiquement le dispositif 20 de déploiement et de pointage en position déployée selon l'invention. Par rapport à la représentation de la figure 4, le mandrin 23 a poursuivi sa rotation autour de son axe ZN. L'élément linéaire 24 est maintenant en configuration déployée. Dans le cas où l'élément linéaire 24 est un mètre-ruban, ce dernier claque et se met en position rigide, aussi appelée position verrouillée. En configuration déployée de l'élément linéaire 24, la distance entre le support 21 et le support 22 est la distance souhaitée pour l'utilisation du dispositif, par exemple pour une mission d'observation. En configuration déployée, l'axe ZN du mandrin 23 est avantageusement à proximité de la sortie linéaire de l'élément linéaire 24. Ainsi, de par l'encastrement de la première extrémité 25 dans le mandrin 23 et de la seconde extrémité 26 dans le second support 22, l'élément linéaire 24 est dit verrouillé à ses deux extrémités. La poulie de plaquage 30 n'a plus de rôle à jouer puisque l'élément linéaire 24 est verrouillé.

Le positionnement de l'axe ZN du mandrin 23 à proximité de la sortie linéaire de l'élément linéaire 24 permet de garantir une précision importante dans le pointage de l'instrument 29. En effet, en configuration déployée, l'élément linéaire 24 est complètement déployé et rigide, ses deux extrémités 25, 26 sont encastrées respectivement dans le mandrin 23 et dans le second support 22. Le second support 22 étant apte à recevoir un instrument 29, il est alors possible d'effectuer un pointage fin de l'instrument 29 par de micro-oscillations au niveau du mandrin 23, par exemple par des actionneurs. Les micro-oscillations réalisées au niveau du mandrin 23, c'est-à-dire de la première extrémité 25 de l'élément linéaire 24, se répercutent au niveau du second support 22, c'est-à-dire par l'intermédiaire de la seconde extrémité 26 de l'élément linéaire 24. Autrement dit, étant encastré à ses deux extrémités, l'élément linéaire 24 va, à partir d'une micro-rotation à une extrémité 25, provoquer un déplacement au niveau du support 22 au niveau de son autre extrémité 26 par sa déformation. Comme expliqué précédemment aux figures 1a et 1b, avec une rotation du mandrin 23, l'élément linéaire 24 étant encastré dans le mandrin 23 et relié à sa seconde extrémité 26 au second support 22, l'élément linéaire 24 se déforme linéairement. Autrement dit, le support 22 (et donc l'instrument 29) est mis en mouvement par rapport au mandrin 23. Dans le cas d'un hexapode, les autres jambes offrent un guidage complexe, quasi linéaire, au niveau du support 22. A partir d'une rotation au niveau du mandrin 23, on obtient un mouvement quasi linéaire au niveau du support 22. Comme ce guidage linéaire est basé sur la déformation d'un élément linéaire 24, on obtient une grande précision au niveau du déplacement linéaire du support 22, et donc de l'instrument 29. En d'autres termes, une micro-oscillation au niveau du mandrin 23 génère un pointage fin du support 22 et donc de l'instrument 29.

La forme et la taille de la section de l'élément linéaire 24 sont choisies en fonction du déplacement du support 22 souhaité ainsi que du couple fourni au niveau du mandrin 23 par un moteur permettant la motorisation du mandrin 23. La section dépend également de l'effort appliqué au support 22, c'est-à-dire du type d'instrument 29 à faire pointer. La valeur de décalage entre l'axe moteur et l'axe ruban a également un fort impact.

Le principe de base de l'invention a été expliqué avec deux supports 21, 22, un élément linéaire 24 et un mandrin 23. L'invention s'applique aussi à deux supports 21, 22 avec deux éléments linéaires et deux mandrins, ou trois éléments linéaires et trois mandrins et plus généralement avec N éléments linéaires et N mandrins (un mandrin par élément linéaire), N étant un nombre entier supérieur ou égal à un.

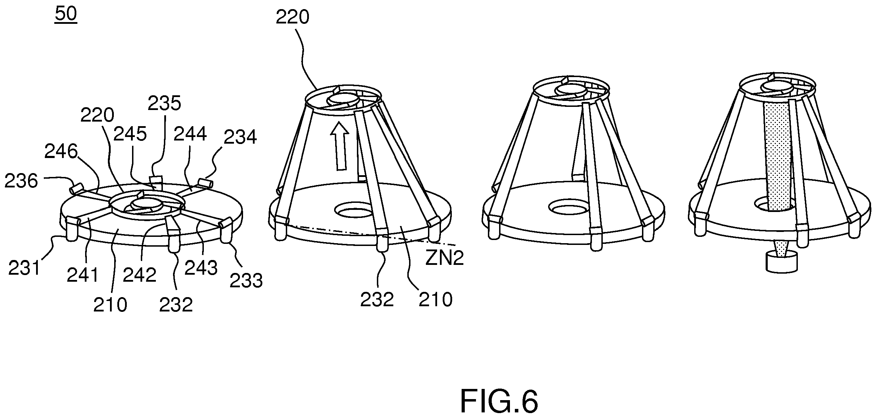

La **figure 6** représente schématiquement un mode de réalisation d'un dispositif 50 de déploiement et de pointage avec six éléments linéaires 241, 242, 243, 244, 245, 246 selon l'invention. Le dispositif 50 comprend un premier support 210 et un second support 220 destiné à recevoir un instrument. Il comprend six mandrins 231, 232, 233, 234, 235, 236 positionnés autour du premier support 210. Chacun des six mandrins 231, 232, 233, 234, 235, 236 est mobile en rotation par rapport au premier support 210 autour d'un axe de mandrin ZN1, ZN2, ZN3, ZN4, ZN5, ZN6 intersectant le mandrin correspondant. Par exemple, l'axe ZN2 intersecte le mandrin 232, autour duquel s'enroule et se déploie l'élément linéaire 242. Les six mandrins peuvent être uniformément répartis autour du premier support 210 ou répartis de manière non uniforme autour du premier support 210. Selon le type de premier support 210, les mandrins peuvent aussi être positionnés sur le premier support 210.

Les mandrins peuvent être positionnés indifféremment tangentiellement ou radialement par rapport à l'axe principal de visée.

En configuration enroulée, la distance entre le premier support 210 et le second support 220 est très faible, voire nulle si le second support 220 est directement en contact avec le premier support 210. En configuration déployée, chacun des éléments linéaires 241, 242, 243, 244, 245, 246 est verrouillé. La distance entre les deux supports est la distance souhaitée. Du fait de la répartition des mandrins 231, 232, 233, 234, 235, 236 autour du premier support 210 et du verrouillage des éléments linéaires 241, 242, 243, 244, 245, 246, en faisant faire à un des mandrins, ou à deux ou plus, ou même à tous les mandrins, des micro-oscillations comme expliqué précédemment, il est possible, par déformation de l'élément linéaire verrouillé concerné (ou des éléments linéaires verrouillés concernés), de réaliser un pointage fin du support 220. Pour ce faire, à chacun des mandrins est associé un motoréducteur afin d'animer en rotation le mandrin. Dans le cadre d'une application spatiale sur un satellite, les motoréducteurs peuvent être sur un plateau fixe et couplé thermiquement à la caisse du satellite. Cette configuration a l'avantage de permettre une bonne évacuation thermique lorsque le dispositif de déploiement et de pointage se déploie.

Ainsi, le dispositif selon l'invention permet, avec un minimum de composants, le déploiement et le gerbage d'un instrument grâce aux éléments linéaires, avantageusement des mètre-rubans, et aux mandrins positionnés à la base de chaque élément linéaire. Il permet aussi le pointage fin de l'instrument basé sur la déformation du ou des éléments linéaires, le nombre d'éléments linéaires pouvant être choisi notamment en fonction de l'encombrement admissible et la raideur souhaitée. Le ou les mandrin(s) ont un rôle important puisqu'ils sont à la fois un outil de stockage du ou des éléments linéaires, un outil de déroulement du ou des éléments linéaires et enfin ils permettent le contrôle fin du positionnement de l'instrument par micro-rotations. Le pointage fin est obtenu selon six degrés de liberté du second support 220 par une relation liant les trois rotations et trois translations du support 220 à la position des six actionneurs au niveau de l'instrument 29. La géométrie de l'ensemble des éléments linéaires et mandrins peut être choisie pour adapter cette relation aux besoins du pointage fin.

L'utilisation de mètre-rubans comme éléments linéaires offre l'avantage supplémentaire de permettre au dispositif de se reployer si besoin.

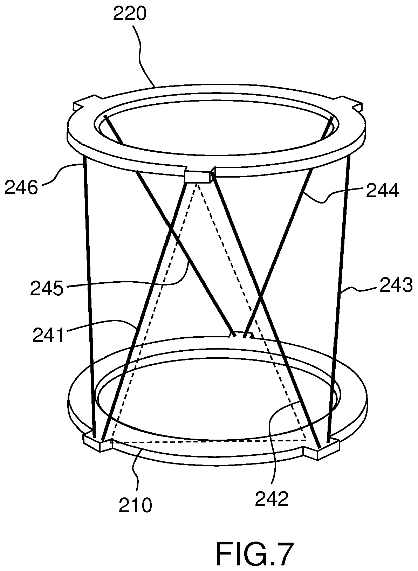

La **figure 7** représente schématiquement un exemple de réalisation d'un dispositif de déploiement et de pointage selon l'invention comprenant six éléments linéaires. Les six éléments linéaires 241, 242, 243, 244, 245, 246 forment trois paires de deux éléments linéaires, et deux éléments linéaires d'une paire, par exemple 241 et 242 et/ou 243 et 244, etc., constituent deux côtés d'un triangle une fois placés en leur configuration déployée.

Du fait de cet agencement particulier, les deux éléments linéaires 241, 242 d'une paire créent des forces dont les composantes vectorielles contribuent à établir un équilibre dans le plan de la figure. L'équilibre de l'ensemble est alors assuré par la coopération des trois paires de lames dont les secondes extrémités sont réparties judicieusement à la périphérie du second support 220. Plus précisément, les secondes extrémités sont ici solidarisées à des pattes de fixation qui sont placées sensiblement à 120° les unes des autres.

Avantageusement, les éléments linéaires de chaque paire sont de longueur identique de sorte que le triangle correspondant soit de type isocèle. Cet équilibre est alors optimisé lorsque les éléments linéaires des différentes paires sont de longueurs identiques, et donc que les triangles correspondants sont de type isocèle. Dans cette configuration, en cas de dilatation uniforme des éléments linéaires, le mouvement de l'élément déployé est réduit.

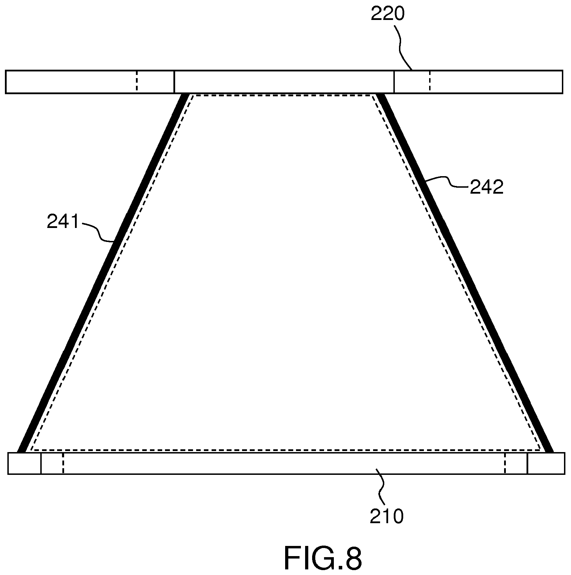

La **figure 8** représente schématiquement un autre exemple de réalisation d'un dispositif de déploiement et de pointage selon l'invention. On y voit deux éléments linéaires 241, 242 d'une paire constituant deux côtés non parallèles d'un trapèze une fois placés en leur configuration déployée.

Avantageusement, les éléments linéaires de chaque paire sont de longueur identique de sorte que le trapèze correspondant soit de type isocèle. Comme dans le cas des triangles, l'équilibre du dispositif est optimisé lorsque les éléments linéaires des différentes paires sont de longueurs identiques.

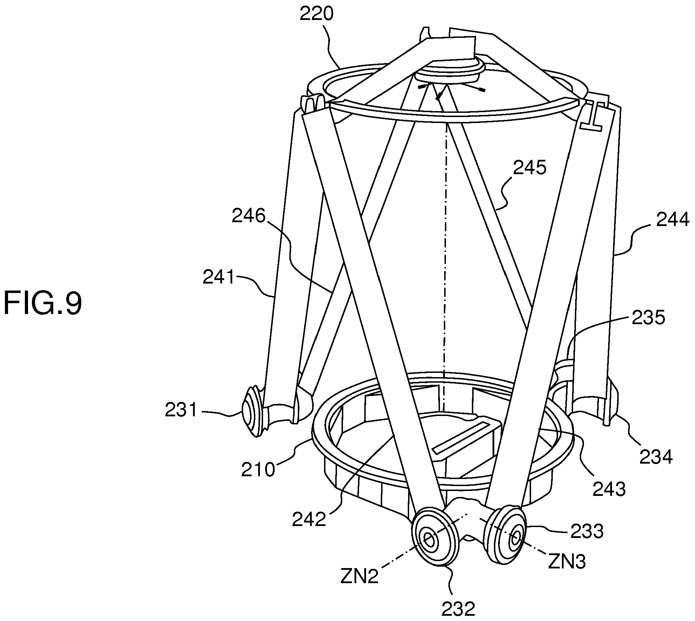

La **figure 9** représente un mode de réalisation d'un dispositif 50 de déploiement et de pointage selon l'invention comprenant trois paires d'éléments linéaires, deux éléments linéaires d'une paire constituant deux côtés d'un triangle une fois placés dans leurs positions finales respectives. Les six mandrins 231, 232, 233, 234, 235, 236 sont positionnés autour du premier support 210.

De manière avantageuse, la géométrie choisie permet d'avoir pour toutes les étapes du déploiement l'axe de déploiement dans le plan de symétrie des éléments linéaires.

Cette configuration est propice à un encastrement linéique de chacune des secondes extrémités des éléments linéaires 242, 243 au niveau du second support 220 et facilite la translation du second support 220 par rapport au premier support 210 lors du déploiement des éléments linéaires en utilisant la flexion de ceux-ci dans leur plan de symétrie.

Les modes de réalisation des figures 7, 8, 9 sont présentés à titre d'exemple. On ne sort pas du cadre de l'invention avec un positionnement et/ou un nombre différents des éléments linéaires.

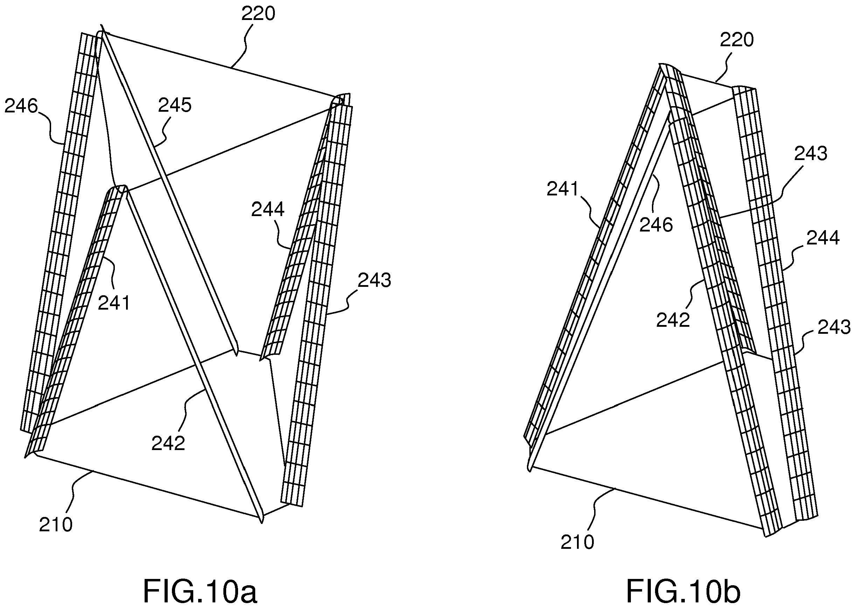

Les **figures 10a et 10b** représentent schématiquement un autre exemple de réalisation d'un dispositif de déploiement et de pointage selon l'invention. Les deux dispositifs des figures 10a et 10b comprennent chacun six éléments linéaires. Les six éléments linéaires 241, 242, 243, 244, 245, 246 forment trois paires de deux éléments linéaires, et deux éléments linéaires d'une paire, par exemple 241 et 242 et/ou 243 et 244, etc., constituent deux côtés d'un triangle une fois placés en leur configuration déployée. Ces deux figures illustrent bien le fait qu'en position déployée, les éléments linéaires peuvent former des triangles positionnés de façon à ce que le plan contenant leur surface soit perpendiculaire au plan contenant la surface du support 210, mais pas nécessairement, comme on peut le voir sur la figure 10a.

Par ailleurs, l'invention s'applique aussi avec un second support 220 de taille et de forme pouvant varier, notamment pour un gain en termes d'encombrement, comme on peut le voir sur la figure 10b.

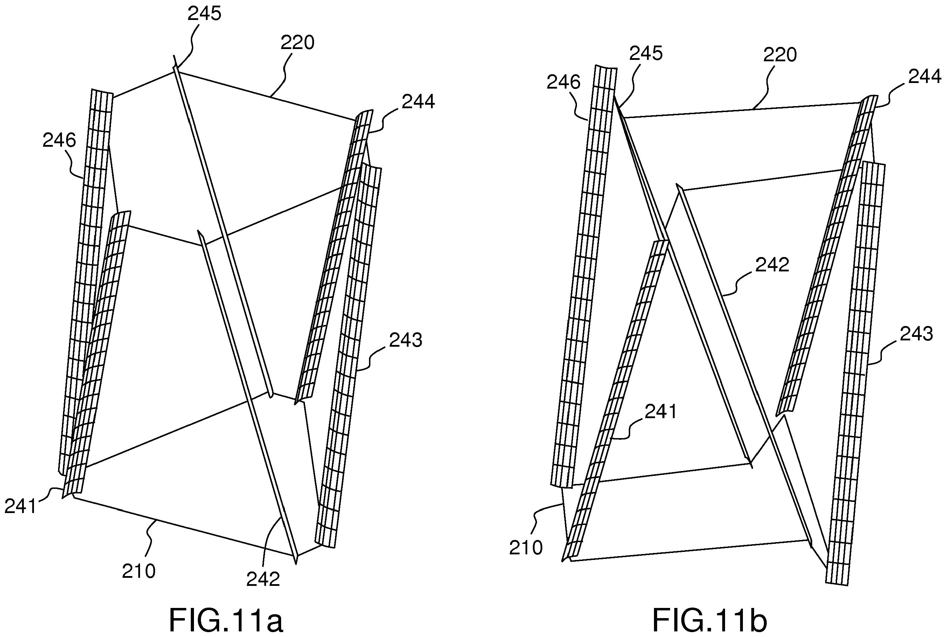

Les **figures 11a et 11b** représentent schématiquement un autre exemple de réalisation d'un dispositif de déploiement et de pointage selon l'invention. Les deux dispositifs des figures 11a et 11b comprennent chacun six éléments linéaires. Les six éléments linéaires 241, 242, 243, 244, 245, 246 forment trois paires de deux éléments linéaires, et deux éléments linéaires d'une paire, par exemple 241 et 242 et/ou 243 et 244, etc., constituent deux côtés non parallèles d'un trapèze une fois placés en leur configuration déployée. Ces deux figures illustrent bien le fait qu'en position déployée, les éléments linéaires peuvent former des trapèzes de forme quelconque positionnés de façon à ce que le plan contenant leur surface soit perpendiculaire au plan contenant la surface du support 210, mais pas nécessairement, comme on peut le voir sur la figure 11a.

Par ailleurs, l'invention s'applique aussi avec un second support 220 de taille et de forme pouvant varier, notamment pour un gain en termes d'encombrement, comme on peut le voir sur la figure 11b. A cet effet, il est en plus possible de décaler un élément linéaire sur deux dans l'axe de déploiement pour accentuer le gain de place.

L'invention concerne aussi un équipement spatial comprenant un dispositif 10, 20 ou 50 de déploiement et de pointage d'un instrument tel que décrit précédemment.

## Revendications

1. Dispositif (10, 20, 50) de déploiement et de pointage d'un instrument (19, 29) comprenant :
- un premier support (13, 21, 210),
- un second support (12, 22, 220) destiné à recevoir l'instrument (19, 29),
- N mandrins (11, 23, 231, 232, 233, 234, 235, 236), N étant un nombre entier supérieur ou égal à 1, positionnés autour du premier support (13, 21, 210), chacun des N mandrins (11, 23, 231, 232, 233, 234, 235, 236) étant mobile en rotation par rapport au premier support (11, 21, 210) autour d'un axe de mandrin ZN intersectant ledit mandrin,
- N éléments linéaires (14, 24, 241, 242, 243, 244, 245, 246), chacun des N éléments linéaires coopérant avec un des N mandrins, chacun des N éléments linéaires ayant une première (15, 25) et une seconde (16, 26) extrémités, la première extrémité (15, 25) des N éléments linéaires (14, 24, 241, 242, 243, 244, 245, 246) étant fixée dans le mandrin avec lequel il coopère en un point de fixation (40), et la seconde extrémité (16, 26) des N éléments linéaires étant reliée au second support (12, 22, 220), de façon à ce qu'une rotation dudit mandrin autour de son axe ZN génère un déplacement du point de fixation (40), **caractérisé en ce que** chacun des N mandrins (13, 23, 231, 232, 233, 234, 235, 236) est excentrique autour de l'axe de mandrin ZN intersectant ledit mandrin.

2. Dispositif (20, 50) selon la revendication précédente, **caractérisé en ce que** chacun des N éléments linéaires (24, 241, 242, 243, 244, 245, 246) est apte à passer d'une configuration enroulée autour du mandrin (23, 231, 232, 233, 234, 235, 236) avec lequel il coopère autour de l'axe de mandrin ZN intersectant ledit mandrin à une configuration déployée selon l'axe de déploiement XN sensiblement perpendiculaire à l'axe de mandrin ZN, et inversement.

3. Dispositif (10, 20, 50) selon l'une quelconque des revendications précédentes, **caractérisé en ce que** chacun des N mandrins (11, 23, 231, 232, 233, 234, 235, 236) est configuré de façon à avoir un rayon minimal apte à permettre l'enroulement de l'élément linéaire (14, 24, 241, 242, 243, 244, 245, 246) coopérant avec ledit mandrin sans l'endommager.

4. Dispositif (10, 20, 50) selon l'une quelconque des revendications précédentes, **caractérisé en ce qu'**au moins un des N mandrins est une roue cylindrique autour d'un axe de roue, l'axe de mandrin ZN intersectant ledit mandrin étant sensiblement parallèle à l'axe de roue et décentré par rapport à l'axe de roue.

5. Dispositif (20, 50) selon l'une quelconque des revendications 2 à 4, **caractérisé en ce que** la seconde extrémité (26) des N éléments (24) linéaires est reliée au second support (22) de façon à guider linéairement le second support (22) par rotation des N mandrins (23) en configuration déployée.

6. Dispositif (10, 20, 50) selon l'une quelconque des revendications précédentes, **caractérisé en ce qu'**il comprend N éléments de contact (28), chacun des N éléments de contact (28) coopérant avec un des N éléments linéaires (24), chacun des N éléments de contact (28) étant configuré pour s'opposer au décollement de l'élément linéaire (24) avec lequel il coopère par rapport au mandrin (23) avec lequel l'élément linéaire (24) coopère.

7. Dispositif (20, 50) selon l'une quelconque des revendications précédentes, **caractérisé en ce que** les N éléments linéaires (24) sont des mètre-rubans.

8. Dispositif (50) selon l'une quelconque des revendications 2 à 7, **caractérisé en ce que** N est égal à 6, les N éléments linéaires (241, 242, 243, 244, 245, 246) formant trois paires de deux éléments linéaires, et **en ce que** deux éléments linéaires d'une paire constituent deux côtés non parallèles d'un trapèze une fois placés en leur configuration déployée.

9. Dispositif (50) selon l'une quelconque des revendications 2 à 7, **caractérisé en ce que** N est égal à 6, les N éléments linéaires (241, 242, 243, 244, 245, 246) formant trois paires de deux éléments linéaires, et **en ce que** deux éléments linéaires d'une paire constituent deux côtés d'un triangle une fois placés en leur configuration déployée.

10. Dispositif (50) selon la revendication 8, **caractérisé en ce que** les éléments linéaires de chaque paire sont de longueur identique de sorte que le trapèze correspondant soit de type isocèle.

11. Dispositif (50) selon la revendication 9, **caractérisé en ce que** les éléments linéaires de chaque paire sont de longueur identique de sorte que le triangle correspondant soit de type isocèle.

12. Equipement spatial **caractérisé en ce qu'**il comprend au moins un dispositif (10, 20, 50) selon l'une quelconque des revendications précédentes.

## Patentansprüche

1. Vorrichtung (10, 20, 50) zur Entfaltung und zur Ausrichtung eines Instruments (19, 29), umfassend:
- einen ersten Träger (13, 21, 210),
- einen zweiten Träger (12, 22, 220), der vorgesehen wird, das Instrument (19, 29) aufzunehmen,
- N um den ersten Träger (13, 21, 210) angeordnete Spindeln (11, 23, 231, 232, 233, 234, 235, 236), wobei N eine ganze Zahl größer oder gleich 1 ist, wobei jede der N Spindeln (11, 23, 231, 232, 233, 234, 235, 236) bezüglich des ersten Trägers (11, 21, 210) um eine Spindelachse ZN, die die Spindel schneidet, drehbar beweglich ist,
- N lineare Elemente (14, 24, 241, 242, 243, 244, 245, 246), wobei jedes der N linearen Elemente mit einer der N Spindeln zusammenwirkt, wobei jedes der N linearen Elemente ein erstes (15, 25) und ein zweites (16, 26) Ende aufweist,
wobei das erste Ende (15, 25) der N linearen Elemente (14, 24, 241, 242, 243, 244, 245, 246) in der Spindel befestigt wird, mit der es in einem Befestigungspunkt (40) zusammenwirkt, und das zweite Ende (16, 26) der N linearen Elemente mit dem zweiten Träger (12, 22, 220) derart verbunden wird, dass eine Drehung der Spindel um ihre Achse ZN eine Verschiebung des Befestigungspunkts (40) erzeugt,
**dadurch gekennzeichnet, dass** jede der N Spindeln (13, 23, 231, 232, 233, 234, 235, 236) um die Spindelachse ZN, die die Spindel schneidet, exzentrisch ist.

2. Vorrichtung (20, 50) nach dem vorhergehenden Anspruch, **dadurch gekennzeichnet, dass** jedes der N linearen Elemente (24, 241, 242, 243, 244, 245, 246) geeignet ist, von einer um die Spindel (23, 231, 232, 233, 234, 235, 236) aufgewickelten Konfiguration, mit der es um die Spindelachse ZN zusammenwirkt, indem es die Spindel schneidet, zu einer gemäß der Entfaltungsachse XN im Wesentlichen senkrecht zur Spindelachse ZN und umgekehrt entfalteten Konfiguration überzugehen.

3. Vorrichtung (10, 20, 50) nach einem der vorhergehenden Ansprüche, **dadurch gekennzeichnet, dass** jede der N Spindeln (11, 23, 231, 232, 233, 234, 235, 236) derart konfiguriert wird, dass sie einen Mindestradius aufweist, der geeignet ist, das Aufwickeln des linearen Elements (14, 24, 241, 242, 243, 244, 245, 246) zu ermöglichen, das mit der Spindel zusammenwirkt, ohne sie zu beschädigen.

4. Vorrichtung (10, 20, 50) nacheinem der vorhergehenden Ansprüche, **dadurch gekennzeichnet, dass** mindestens eine der N Spindeln ein zylindrisches Rad um eine Radachse ist, wobei die Spindelachse ZN die Spindel schneidet, die im Wesentlichen parallel zu der Radachse und versetzt bezüglich der Radachse ist.

5. Vorrichtung (20, 50) nach einem der Ansprüche 2 bis 4, **dadurch gekennzeichnet, dass** das zweite Ende (26) der N linearen Elemente (24) mit dem zweiten Träger (22) derart verbunden wird, dass es den zweiten Träger (22) durch Drehung der N Spindeln (23) in entfalteter Konfiguration linear führt.

6. Vorrichtung (10, 20, 50) nacheinem der vorhergehenden Ansprüche, **dadurch gekennzeichnet, dass** sie N Kontaktelemente (28) umfasst, wobei jedes der N Kontaktelemente (28) mit einem der N linearen Elemente (24) zusammenwirkt, wobei jedes der N Kontaktelemente (28) konfiguriert wird, um dem Ablösen des linearen Elements (24) Widerstand zu leisten, mit dem es bezüglich der Spindel (23) zusammenwirkt, mit der das lineare Element (24) zusammenwirkt.

7. Vorrichtung (20, 50) nach einem der vorhergehenden Ansprüche, **dadurch gekennzeichnet, dass** die N linearen Elemente (24) Maßbänder sind.

8. Vorrichtung (50) nach einem der Ansprüche 2 bis 7, **dadurch gekennzeichnet, dass** N gleich 6 ist, wobei die N linearen Elemente (241, 242, 243, 244, 245, 246) drei Paare von zwei linearen Elementen bilden, und dass zwei lineare Elemente eines Paars zwei nicht parallele Seiten eines Trapezes darstellen, wenn sie erst einmal in ihrer entfalteten Konfiguration angeordnet werden.

9. Vorrichtung (50) nach einem der Ansprüche 2 bis 7, **dadurch gekennzeichnet, dass** N gleich 6 ist, wobei die N linearen Elemente (241, 242, 243, 244, 245, 246) drei Paare von zwei linearen Elementen bilden, und dass zwei lineare Elemente eines Paars zwei nicht parallele Seiten eines Dreiecks darstellen, wenn sie erst einmal in ihrer entfalteten Konfiguration angeordnet werden.

10. Vorrichtung (50) nach Anspruch 8, **dadurch gekennzeichnet, dass** die linearen Elemente jedes Paars derart gleicher Länge sind, dass das entsprechende Trapez von gleichschenkeligem Typ ist.

11. Vorrichtung (50) nach Anspruch 9, **dadurch gekennzeichnet, dass** die linearen Elemente jedes Paars derart gleicher Länge sind, dass das entsprechende Dreieck von gleichschenkeligem Typ ist.

12. Weltraumausrüstung, **dadurch gekennzeichnet, dass** sie mindestens eine Vorrichtung (10, 20, 50) nach einem der vorhergehenden Ansprüche umfasst.

## Claims

1. Deployment and aiming device (10, 20, 50) of an instrument (19, 29) comprising:
- a first support (13, 21, 210),
- a second support (12, 22, 220) intended to receive the instrument (19, 29),
- N mandrels (11, 23, 231, 232, 233, 234, 235, 236), N being an integer number greater than or equal to 1, positioned around the first support (13, 21, 210), each of the N mandrels (11, 23, 231, 232, 233, 234, 235, 236) being rotationally mobile relative to the first support (11, 21, 210) about a mandrel axis ZN intersecting said mandrel,
- N linear elements (14, 24, 241, 242, 243, 244, 245, 246), each of the N linear elements cooperating with one of the N mandrels, each of the N linear elements having a first (15, 25) and a second (16, 26) ends,
the first end (15, 25) of the N linear elements (14, 24, 241, 242, 243, 244, 245, 246) being fixed in the mandrel with which it cooperates at a fixing point (40), and being the second end (16, 26) of the N linear elements being linked to the second support (12, 22, 220), such that a rotation of said mandrel about its axis ZN generates a displacement of the fixing point (40),
**characterized in that** each of the N mandrels (13, 23, 231, 232, 233, 234, 235, 236) is eccentric about the mandrel axis ZN intersecting said mandrel.

2. Device (20, 50) according to the preceding claim, **characterized in that** each of the N linear elements (24, 241, 242, 243, 244, 245, 246) is capable of switching from a configuration wound around the mandrel (23, 231, 232, 233, 234, 235, 236) with which it cooperates about the mandrel axis ZN intersecting said mandrel to a configuration deployed according to the deployment axis XN substantially at right angles to the mandrel axis ZN, and vice versa.

3. Device (10, 20, 50) according to either one of the preceding claims, **characterized in that** each of the N mandrels (11, 23, 231, 232, 233, 234, 235, 236) is configured so as to have a minimum radius capable of allowing the linear element (14, 24, 241, 242, 243, 244, 245, 246) cooperating with said mandrel to be wound without damaging it.

4. Device (10, 20, 50) according to any one of the preceding claims, **characterized in that** at least one of the N mandrels is a cylindrical wheel about a wheel axis, the mandrel axis ZN intersecting said mandrel being substantially parallel to the wheel axis and off-centre relative to the wheel axis.

5. Device (20, 50) according to any one of Claims 2 to 4, **characterized in that** the second end (26) of the N linear elements (24) is linked to the second support (22) so as to linearly guide the second support (22) by rotation of the N mandrels (23) in deployed configuration.

6. Device (10, 20, 50) according to any one of the preceding claims, **characterized in that** it comprises N contact elements (28), each of the N contact elements (28) cooperating with one of the N linear elements (24), each of the N contact elements (28) being configured to oppose the lifting of the linear element (24) with which it cooperates relative to the mandrel (23) with which the linear element (24) cooperates.

7. Device (20, 50) according to any one of the preceding claims, **characterized in that** the N linear elements (24) are tape springs.

8. Device (50) according to any one of Claims 2 to 7, **characterized in that** N is equal to 6, the N linear elements (241, 242, 243, 244, 245, 246) forming three pairs of two linear elements, and **in that** two linear elements of a pair constitute two non-parallel sides of a trapezium once placed in their deployed configuration.

9. Device (50) according to any one of Claims 2 to 7, **characterized in that** N is equal to 6, the N linear elements (241, 242, 243, 244, 245, 246) forming three pairs of two linear elements, and **in that** two linear elements of a pair constitute two sides of a triangle once placed in their deployed configuration.

10. Device (50) according to Claim 8, **characterized in that** the linear elements of each pair are of identical length such that the corresponding trapezium is of isosceles type.

11. Device (50) according to Claim 9, **characterised in that** the linear elements of each pair are of identical length, such that the corresponding triangle is of isosceles type.

12. Space equipment, **characterized in that** it comprises at least one device (10, 20, 50) according to any one of the preceding claims.
